(19) Europäisches Patentamt
European Patent Office
Office européen des brevets

(11) **EP 4 567 148 A1**

(12) **EUROPEAN PATENT APPLICATION**
published in accordance with Art. 153(4) EPC

(43) Date of publication:
**11.06.2025 Bulletin 2025/24**

(21) Application number: **23849234.2**

(22) Date of filing: **25.07.2023**

(51) International Patent Classification (IPC):
**C22C 38/02** (2006.01)

(52) Cooperative Patent Classification (CPC):
Y02P 10/20

(86) International application number:
**PCT/CN2023/109002**

(87) International publication number:
**WO 2024/027526 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.08.2022 CN 202210934194**

(71) Applicants:
• **Institute of Research of Iron and Steel, Jiangsu Province/Sha-Steel, Co. Ltd (CN)**
  **Suzhou, Jiangsu 215625 (CN)**
• **Jiangsu Shagang Steel Co., Ltd.**
  **Suzhou, Jiangsu 215625 (CN)**
• **Jiangsu Shagang Group Co., Ltd.**
  **Suzhou, Jiangsu 215625 (CN)**

(72) Inventors:
• **YANG, Hao**
  **Suzhou, Jiangsu 215625 (CN)**
• **QU, Jinbo**
  **Suzhou, Jiangsu 215625 (CN)**
• **ZHEN, Fan**
  **Suzhou, Jiangsu 215625 (CN)**
• **LU, Chunjie**
  **Suzhou, Jiangsu 215625 (CN)**

(74) Representative: **Gille Hrabal Partnerschaftsgesellschaft mbB Patentanwälte Brucknerstraße 20 40593 Düsseldorf (DE)**

(54) **EXTRA-THICK Q500QE BRIDGE STEEL PLATE AND PRODUCTION METHOD THEREFOR**

(57) The present application provides an extra-thick Q500qE bridge steel plate and a production method therefore. The production method involves direct rolling of the slab after three-stage heating before rolling and three-stage cooling of the steel plate after rolling. This method can produce a Q500qE steel plate with a maximum thickness of 150mm, which meets the Z35 level Z-direction tensile performance requirements and the nondestructive testing requirements of Grade II or above according to GB/T 2970-2016 standard. The production process is simple, efficient, and cost-effective.

Smelting and continuous casting according to the above chemical components to obtain a slab — S1

Sequentially heating the slab through a first stage heating, a second stage heating, and a third stage heating. The temperature of the second stage heating is controlled at 1180~1220°C, while the temperatures of the first stage heating and the third stage heating are controlled to be lower than that of the second stage heating. The first heating stage and the second heating stage are used to uniformly heat the slab, and the third heating stage is used to form a gradually increasing temperature gradient from the surface to the core of the slab — S2

Rolling the heated slab with a single stage rolling to obtain a rolled steel plate with a maximum thickness of 150mm — S3

Sequentially cooling the rolled steel plate through a first stage cooling, a second stage cooling, and a third stage cooling. The final cooling temperature of the third stage cooling is controlled to be 350°C or less, and the cooling rate of the first stage cooling, the second stage cooling, and the third stage cooling increases sequentially — S4

FIG. 1

**Description**

**TECHNICAL FIELD**

The present application relates to the field of alloy technology, specifically relates to an extra-thick Q500qE bridge steel plate and a production method therefor.

**BACKGROUND**

With the continuous development of social economy, there is an increasing number of large-span, heavy-load super-large bridge projects. As the span increases and the load increases, the demand for bridge steel with extra-thick specification is also growing, and the performance requirements for the steel plates are becoming higher, such as higher strength, better toughness, fewer internal defects, and superior resistance to lamellar tearing. Compared to ordinary bridge steel, extra-thick bridge steel has defects of non-conformance in nondestructive testing and poor resistance to lamellar tearing resulted of insufficient deformation in the core of the steel plate and the center defects of the slab cannot being rolled together.due to the increase of finished thickness decrease of compression ratio. Additionally, as the thickness of the steel plate increases, the cooling penetration capability deteriorates, the effective control of the strength and toughness of the steel plate through online cooling after rolling is impossible.

The existing production methods for extra-thick bridge steel are relatively complex and still produce relatively thin plates. For example, patents with application number CN107557690B and CN102041438B use mold casting to manufacture billets, while patents with application number CN107460278B and CN107287527B use composite billets to obtain large-thickness billets. Although patents with application number CN104988435B and CN103540848B use continuous casting billets to produce extra-thick plates, the maximum thickness of the steel plates that can be produced is only 120mm. Therefore, how to produce extra-thick bridge steel through a relatively simple production process is an urgent problem for the industry to solve.

**SUMMARY**

An object of the present application is to provide an extra-thick Q500qE bridge steel plate and a production method therefor.

The present application provides a method for producing an extra-thick Q500qE bridge steel plate, wherein the chemical components of the steel plate comprise the following components in percent by mass: C: 0.05~0.07%, Si: 0.15~0.35%, Mn: 1.5~1.7%, Ni: 0.3~0.5%, Cr: 0.2~0.3%, Mo: 0.2~0.3%, Cu: 0.15~0.25%, Nb: 0.04~0.05%, Ti: 0.01~0.02%, with the balance being Fe and inevitable impurities, wherein the impurities include P$\leq$0.01% and S$\leq$0.003%; the production method comprises the following steps:

smelting and continuous casting according to the above chemical components to obtain a slab;
sequentially heating the slab through a first stage heating, a second stage heating, and a third stage heating, wherein the temperature of the second stage heating is controlled at 1180~1220°C, and the temperatures of the first stage heating and the third stage heating are controlled to be lower than that of the second stage heating, wherein the first heating stage and the second heating stage are used to uniformly heat the slab, and the third heating stage is used to form a gradually increasing temperature gradient from the surface to the core of the slab;
rolling the heated slab with a single stage rolling to obtain a rolled steel plate with a maximum thickness of 150mm;
sequentially cooling the rolled steel plate through a first stage cooling, a second stage cooling, and a third stage cooling, wherein the final cooling temperature of the third stage cooling is controlled to be 350°C or less, and the cooling rate of the first stage cooling, the second stage cooling, and the third stage cooling increases sequentially.

As a further improvement of an embodiment of the present application, the chemical components of the steel plate further satisfy: carbon equivalent CE$\leq$0.485, and cold cracking susceptibility index Pcm$\leq$0.24, wherein the formula for calculating the carbon equivalent CE is:

$$CE=(\%C)+(\%Mn)/6+(\%Cr+\%Mo+\%V)/5+(\%Ni+\%Cu)/15,$$

and the formula for calculating the cold cracking susceptibility index Pcm is:

$$Pcm=(\%C)+(\%Si)/30+(\%Mn+\%Cu+\%Cr)/20+(\%Ni)/60+(\%Mo)/15+(\%V)/10+5(\%B),$$

wherein the element symbols in parentheses represent the mass percentages of the corresponding elements, and % element symbols represent the mass percentages of the corresponding elements multiplied by 100.

As a further improvement of an embodiment of the present application, the step of smelting and continuous casting according to the above chemical components to obtain a slab specifically comprises:

smelting to obtain molten steel by sequentially passing through molten iron pre-desulfuration, converter smelting, LF furnace refining, and RH furnace vacuum refining working procedures according to the above chemical composition, and continuously casting the molten steel to obtain a slab with a thickness of 320mm, followed by stacking and cooling the slab.

As a further improvement of an embodiment of the present application, the step of sequentially heating the slab through a first stage heating, a second stage heating, and a third stage heating specifically comprises:

sequentially heating the slab through a first stage heating, a second stage heating, and a third stage heating, wherein the temperature of the first stage heating is controlled at 900~1100°C, with a heating time of 150min or more; the temperature of the second stage heating is controlled at 1180~1220°C, with a heating time of 180~240min; and the temperature of the third stage heating is controlled at 1140~1160°C, with a heating time of 30~60min.

As a further improvement of an embodiment of the present application, the step of rolling the heated slab with a single stage rolling specifically comprises:

descaling the slab after the three-stage heating and then rolling the slab, wherein the rolling temperature is controlled at 980~1080°C, and the reduction per pass is controlled to be 40mm or more except the last pass.

As a further improvement of an embodiment of the present application, the step of rolling the heated slab with a single stage rolling further comprises:

controlling the bite speed at 0.6m/s and the rolling speed at 1.2m/s during the rolling process.

As a further improvement of an embodiment of the present application, the step of sequentially cooling the rolled steel plate through a first stage cooling, a second stage cooling, and a third stage cooling specifically comprises:

sequentially cooling the rolled steel plate through a first stage cooling, a second stage cooling, and a third stage cooling, wherein the cooling rate of the first stage cooling is controlled at 0.3~1°C/s, with a final cooling temperature of 760~780°C; the cooling rate of the second stage cooling is controlled at 3~5°C/s, with a final cooling temperature of 560~600°C, and waiting for 20~40s after the second stage cooling; the cooling rate of the third stage cooling is controlled at 5~8°C/s, with a final cooling temperature of 350°C or less.

The present application also provides an extra-thick Q500qE bridge steel plate, which is manufactured using the method for producing an extra-thick Q500qE bridge steel plate as described above.

As a further improvement of an embodiment of the present application, the microstructure of the steel plate is a dual-phase structure of bainite and martensite, wherein the amount of bainite is greater than the amount of martensite.

As a further improvement of an embodiment of the present application, the steel plate has a lower yield strength of 430MPa or more, a tensile strength of 540MPa or more, a yield ratio of 0.85 or less, an impact energy at -40°C of 180J or more, a Z-direction tensile reduction of area of 50% or more, and meets the nondestructive testing requirements of Grade II or above according to GB/T 2970-2016 standard.

The present application also provides an extra-thick Q500qE bridge steel plate, wherein the chemical components of the steel plate comprise the following components in percent by mass: C: 0.05~0.07%, Si: 0.15~0.35%, Mn: 1.5~1.7%, Ni: 0.3~0.5%, Cr: 0.2~0.3%, Mo: 0.2~0.3%, Cu: 0.15~0.25%, Nb: 0.04~0.05%, Ti: 0.01~0.02%, with the balance being Fe and inevitable impurities, wherein the impurities include P≤0.01% and S≤0.003%;

and the steel plate has a carbon equivalent CE≤0.485, a cold cracking susceptibility index Pcm≤0.24, wherein the formula for calculating the carbon equivalent CE is:

$$CE = (\%C) + (\%Mn)/6 + (\%Cr + \%Mo + \%V)/5 + (\%Ni + \%Cu)/15,$$

and the formula for calculating the cold cracking susceptibility index Pcm is:

$$Pcm = (\%C) + (\%Si)/30 + (\%Mn + \%Cu + \%Cr)/20 + (\%Ni)/60 + (\%Mo)/15 + (\%V)/10 + 5(\%B),$$

wherein the element symbols in parentheses represent the mass percentages of the corresponding elements, and % element symbols represent the mass percentages of the corresponding elements multiplied by 100.

As a further improvement of an embodiment of the present application, the steel plate has a maximum thickness of 150mm, a lower yield strength of 430MPa or more, a tensile strength of 540MPa or more, a yield ratio of 0.85 or less, an impact energy at -40°C of 180J or more, a Z-direction tensile reduction of area of 50% or more, and meets the nondestructive testing requirements of Grade II or above according to GB/T 2970-2016 standard.

As a further improvement of an embodiment of the present application, the microstructure of the steel plate is a dual-phase structure of bainite and martensite, wherein the amount of bainite is greater than the amount of martensite.

The advantageous effects of the present application are as follows: The production method used in the present application, which involves direct rolling of the slab after three-stage heating before rolling, and three-stage cooling treatment of the steel plate after rolling, can produce a Q500qE steel plate with a maximum thickness of 150mm. The steel plate can meet the Z35 level Z-direction tensile performance requirements and the nondestructive testing requirements of Grade II or above according to GB/T 2970-2016 standard. The production process is simple, efficient, and cost-effective. Firstly, during the production process, ordinary continuous casting billets can be used to produce extra-thick steel plates without the need for mold casting or preparation of composite billets. Secondly, during the rolling process, high-temperature single-stage heavy reduction rolling is adopted, eliminating the need for multi-stage low-temperature controlled rolling. The rolling process is simple and efficient. Thirdly, no post-rolling heat treatment such as tempering, normalizing, or accelerated cooling is required after rolling. The production process is streamlined, with a shorter production cycle and lower production costs.

**BRIEF DESCRIPTION OF THE DRAWINGS**

FIG. 1 is a schematic diagram of the steps of the production method for the extra-thick Q500qE bridge steel plate according to an embodiment of the present application; and
FIG. 2 is a metallographic structure image of the extra-thick Q500qE bridge steel plate according to Example 1 of the present application.

**DETAILED DESCRIPTION**

To make the objectives, technical solutions, and advantages of the present application more clear, the technical solutions of the present application will be clearly and completely described below with reference to the specific embodiments of the present application and the corresponding drawings. It is evident that the described embodiments are only part of the embodiments of the present application, not all of them. All other embodiments obtained by a person of ordinary skill in the art based on the embodiments of the present application without creative efforts are within the scope of protection of the present application.

The embodiments described in detail below are illustrated in the drawings. The same or similar reference numerals throughout the drawings denote the same or similar elements or elements with the same or similar functions. The embodiments described with reference to the drawings are exemplary and are used only to explain the present application, not to limit it.

This embodiment provides an extra-thick Q500qE bridge steel plate and a production method therefor. The production method directly rolls continuous casting billets to obtain a steel plate with a maximum thickness of 150mm. Compared to existing extra-thick bridge steel, this method enables the steel plate to achieve high strength and toughness under conditions of low compression ratio, no low-temperature controlled rolling, and no heat treatment. The production method is simple, and the steel plate exhibits excellent performance. The steel plate produced by this method can be used as a Q500qE grade bridge steel plate.

The chemical components of the steel plate provided in this embodiment comprise the following components in percent by mass: C: 0.05~0.07%, Si: 0.15~0.35%, Mn: 1.5~1.7%, Ni: 0.3~0.5%, Cr: 0.2~0.3%, Mo: 0.2~0.3%, Cu: 0.15~0.25%, Nb: 0.04~0.05%, Ti: 0.01~0.02%, with the balance being Fe and inevitable impurities, wherein the impurities include P≤0.01% and S≤0.003%.

Specifically, the design principles of the chemical components of the steel plate are explained as follows:
C is a strengthening element. The amount of C significantly affects the microstructure of the steel, thereby effectively ensuring the strength of the steel plate. Additionally, the content of C plays an important role in the hardenability of the steel plate and the increasing of yield ratio. However, an excessively high C content significantly deteriorates the low-temperature toughness of the steel plate. Therefore, in this embodiment, the C content is controlled to be 0.05~0.07%.

Si acts as a deoxidizing element and can enhance the strength of the material through solid solution strengthening. Si can dissolve in ferrite and austenite to increase the hardness and strength of the steel. Moreover, Si can inhibit pearlite transformation. However, an excessively high Si content can lead to an increase in M/A (martensite/austenite) content, which deteriorates the low-temperature toughness of the steel plate. Therefore, in this embodiment, the Si content is controlled to be 0.15~0.35%.

Mn is a solid solution strengthening element that can improve the hardenability of the steel plate, thereby enhancing its strength. Additionally, Mn promotes the formation of acicular ferrite. Mn is also a good deoxidizer and desulfurizer, which can combine with harmful elements such as S to reduce the hot brittleness of the steel plate. However, an excessive amount of Mn can exacerbate the segregation of elements such as P, Sb, and Sn, deteriorating the low-temperature toughness of the core of the steel plate and leading to non-conformance in nondestructive testing during rolling. Therefore, in this application, the Mn content is controlled to be 1.40~1.60%.

Ni: At the crack tip of the steel, deposition behavior mainly involving P and Ni alloys occurs, leading to chemical deposition on the crack surface at the tail of the crack tip. The NiP deposits induce crack closure and generate residual compressive stress near the crack tip, effectively reducing the propagation rate of fatigue cracks. By releasing stress at the crack tip, the low-temperature toughness of the material is improved. Additionally, Ni can effectively enhance the hardenability of the steel. However, excessive addition of Ni increases alloy costs. Therefore, in this embodiment, the Ni content is controlled to be 0.1~0.2%.

Cr has a solid solution strengthening effect similar to that of Mn and can effectively improve the hardenability of the steel. However, Cr alloy is more expensive than Mn, and an excessively high Cr content affects the stability of supercooled austenite. Therefore, in this embodiment, the Cr content is controlled to be 0.1~0.2%.

Mo can significantly increase the hardenability of the steel and can enhance the strength of the steel plate as combined with accelerated cooling after rolling. However, Mo is an expensive alloy element, and excessive addition can lead to high costs. Therefore, in this embodiment, the Mo content is added at 0.08~0.16%.

Cu can improve the strength and corrosion resistance of the steel plate, with relatively minor adverse effects on low-temperature toughness. However, an excessively high Cu content can cause copper embrittlement, affecting the surface quality of the steel plate. Therefore, in this embodiment, the Cu content is controlled to be 0.15~0.25%.

Nb is a microalloying strengthening element that provides precipitation strengthening and grain refinement strengthening, improving the strength of the steel and enhancing low-temperature toughness. However, an excessively high Nb content can lead to the formation of a large number of large-sized M/A (martensite/austenite) in the heat-affected zone during welding, deteriorating the weldability of the steel plate. Therefore, in this embodiment, the Nb content is controlled to be 0.04~0.05%.

Ti is a microalloying strengthening element that provides precipitation strengthening and grain refinement strengthening. The nitrides and oxides of Ti can inhibit the growth of austenite grains, thereby refining the austenite. In this embodiment, the Ti content is controlled to be 0.01~0.02%.

P and S are residual impurity elements that are detrimental to the low-temperature toughness of the steel. Therefore, the P content is controlled to be 0.015% or less, and the S content is controlled to be 0.005% or less.

Furthermore, the chemical components of the steel plate also satisfy: carbon equivalent CE ≤ 0.485, to ensure good weldability of the steel plate. According to GB/T1591-2018 standard, the formula for calculating the carbon equivalent CE is:

$$CE = (\%C) + (\%Mn)/6 + (\%Cr + \%Mo + \%V)/5 + (\%Ni + \%Cu)/15.$$

The element symbols in parentheses represent the mass percentages of the corresponding elements, and % element symbols represent the mass percentages of the corresponding elements multiplied by 100.

The cold cracking susceptibility index Pcm≤0.24 which is to reduce the tendency of the steel to crack during welding and ensure its weldability. According to GB/T1591-2018 standard, the formula for calculating the cold cracking susceptibility index Pcm is:

$$Pcm = (\%C) + (\%Si)/30 + (\%Mn + \%Cu + \%Cr)/20 + (\%Ni)/60 + (\%Mo)/15 + (\%V)/10 + 5(\%B).$$

The element symbols in parentheses represent the mass percentages of the corresponding elements, and % element symbols represent the mass percentages of the corresponding elements multiplied by 100.

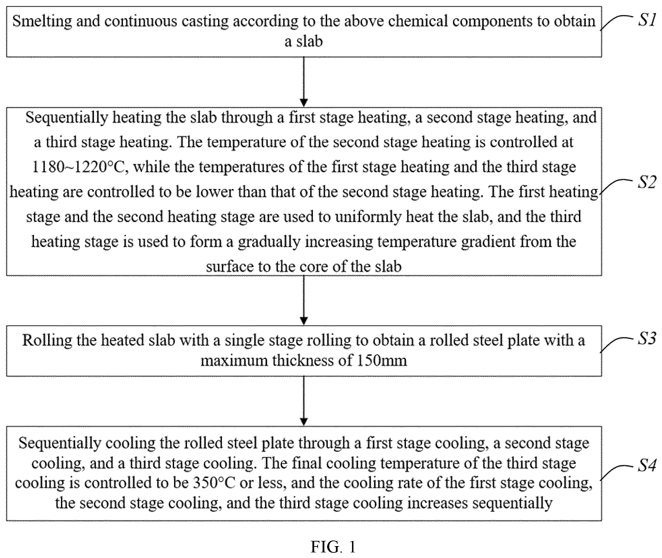

As shown in Figure 1, the production method for the extra-thick Q500qE bridge steel plate comprises the following steps:

S1: Smelting and continuous casting according to the above chemical components to obtain a slab.
S2: Sequentially heating the slab through a first stage heating, a second stage heating, and a third stage heating. The temperature of the second stage heating is controlled at 1180~1220°C, while the temperatures of the first stage heating and the third stage heating are controlled to be lower than that of the second stage heating. The first heating stage and the second heating stage are used to uniformly heat the slab, and the third heating stage is used to form a gradually increasing temperature gradient from the surface to the core of the slab.
S3: Rolling the heated slab with a single stage rolling to obtain a rolled steel plate with a maximum thickness of 150mm.
S4: Sequentially cooling the rolled steel plate through a first stage cooling, a second stage cooling, and a third stage cooling. The final cooling temperature of the third stage cooling is controlled to be 350°C or less, and the cooling rate of the first stage cooling, the second stage cooling, and the third stage cooling increases sequentially.

Specifically, in step S1, the following working procedures are sequentially included:
molten iron pre-desulfuration, converter smelting, LF furnace refining, and RH furnace vacuum refining, continuous casting, and slab stacking and slow cooling.

In the molten iron pre-desulfuration working procedure, KR furnace desulfuration is performed on the molten iron to control the sulfur content in the molten iron. After removing the desulfuration slag, the molten iron is poured into the converter for converter smelting.

In the converter smelting working procedure, pre-desulfurized molten iron and scrap steel are used as raw materials to obtain molten steel. During the smelting process, ferrosilicon alloy, metallic manganese, and carbon powder are sequentially added to the molten steel for deoxidation and alloying.

After refining the molten steel to meet the predetermined requirements, vacuum circulation degassing is performed.

The refined molten steel is then subjected to vacuum circulation degassing to remove inclusions and further refine.

The refined molten steel is continuously cast to form a slab with a thickness of 320mm. After obtaining the slab, it is stacked and slowly cooled.

In this embodiment, the slab thickness is controlled to be 320mm, which allows for the production of a steel plate with a maximum thickness of 150mm as combined with the subsequent rolling process. In other embodiments of the present application, the thickness of the slab obtained from continuous casting can be adjusted based on the required steel plate thickness and rolling process parameters.

In step S2, the process specifically includes:
sequentially heating the slab through a first stage heating, a second stage heating, and a third stage heating. The temperature of the first stage heating is controlled at 900~1100°C, with a heating time of 150 min or more (i.e., the slab stays in the heating furnace for 150min or more). The temperature of the second stage heating is controlled at 1180~1220°C, with a heating time of 180~240min (i.e., the slab stays in the heating furnace for 180~240min). The temperature of the third stage heating is controlled at 1140~1160°C, with a heating time of 30~60min (i.e., the slab stays in the heating furnace for 30~60min).

Heating the slab to a uniform and suitable temperature for rolling before rolling can improve the plasticity of the steel, reduce deformation resistance, and make the steel easier to deform. This allows larger reductions during the slab rolling process. Additionally, heating can improve the internal structure and properties of the slab. Uneven structures and non-metallic inclusions can be homogenized through the diffusion effect of high-temperature heating.

During the first stage heating process, a relatively low heating temperature is set to avoid thermal stress caused by too rapid of temperature increase, which could lead to surface cracking of the slab. A long heating time is set in conjunction with the subsequent second stage heating process to ensure uniform temperature distribution across the slab and to achieve the desired heating temperature.During the second stage heating process, a higher heating temperature and a long stay time are set to ensure that the interior of the slab is fully heated, achieving uniform temperature distribution between the core and the surface of the steel plate. The maximum heating time is limited to avoid excessive grain growth, oxidation or melting of grain boundary caused by heating with high temperature and long time, so as to avoid surface overheating, oxide scale adhesion, and other surface quality issues. During the third stage heating process, a lower heating temperature and a shorter heating time are set compared to the second stage heating process, which can form a temperature gradient from the surface to the core of the slab, which is beneficial for the penetration of deformation into the slab's core during the subsequent rolling process.

In step S3, the process specifically includes:
descaling the slab after the three-stage heating and then rolling the slab. During the rolling process, the rolling temperature is controlled at 980~1080°C, the bite speed is controlled at 0.6m/s, the rolling speed is controlled at 1.2m/s, and the reduction per pass is controlled to be 40mm or more, except the last pass. A steel plate with a maximum thickness of 150mm is obtained.

Descaling involves removing the primary oxide scale from the slab's surface using descaling equipment in preparation for rolling.

In this embodiment, to ensure good core quality of the steel plate under low compression ratio, high-temperature, single-stage, heavy reduction rolling is employed. The rolling temperature is controlled at 980~1080°C, taking advantage of the low deformation resistance at high temperature to perform heavy reduction rolling in a single pass. Except for the last pass, the reduction per pass is 40mm or more, ensuring that deformation penetrates into the slab's core and preventing defects such as core porosity and microcracks after rolling, thereby ensuring that the steel plate meets nondestructive testing requirements.

In this embodiment, the continuous casting billet is directly rolled aftering heating without the need for slabbing rolling before rolling. This simplifies the process steps, reduces the required man-hours, and lowers production consumption. During the rolling process, high-temperature, single-stage, heavy reduction rolling is performed, eliminating the need for multi-stage low-temperature controlled rolling. The rolling process is simple and efficient, with rolling efficiency increased by more than 50% compared to traditional low-temperature controlled rolling processes.

Additionally, in this embodiment, a continuous casting billet with a thickness of 320mm is directly rolled to produce a steel plate with a maximum thickness of 150mm, breaking through the compression ratio limitations of traditional continuous casting billets for producing extra-thick plates.

In step S4, the process specifically includes:
sequentially cooling the rolled steel plate through a first stage cooling, a second stage cooling, and a third stage cooling. The cooling rate of the first stage cooling is controlled at 0.3~1°C/s, with a final cooling temperature of 760~780°C; the cooling rate of the second stage cooling is controlled at 3~5°C/s, with a final cooling temperature of 560~600°C, and a waiting time of 20~40s after the second stage cooling; the cooling rate of the third stage cooling is controlled at 5~8°C/s, with a final cooling temperature of 350°C or less.

The rolled steel plate is subjected to a three-stage cooling process to control its microstructure and ensure it achieves good strength and toughness. In the first stage cooling process, a slow cooling rate is performed to avoid the formation of excessively coarse sideplate ferrite structures near the surface of the steel plate when cooling at around 1000°C, which could affect the low-temperature toughness of the steel plate. This is prepared for the control of near-surface microstructure in the next stage. In the second stage cooling process, the cooling rate is increased to 3~5°C/s compared to the first stage cooling process. This controls the microstructure of the steel plate in region between the near-surface and a depth of 1/4 of the thickness, causing the microstructure in this region to undergo phase transformation firstly. This avoids the formation of excessive martensitic hard phases in the near-surface region during the next stage of strong cooling, which could be detrimental to toughness. In the third stage cooling process, the cooling rate is further increased compared to the second stage cooling process. This controls the microstructure of the steel plate in region between a depth of 1/4 to 1/2 of the thickness. Since this range is closer to the core of the steel plate, the cooling effect is significantly weaker compared to the surface. To ensure the cooling effect in the core of the steel plate, the cooling rate is increased to 5~8°C/s. Additionally, benefitting from the phase transformation of the near-surface layer during the second stage cooling, the cooling intensity of the third stage increased but did not significantly affect the microstructure in near-surface layer。

By performing a three-stage cooling process to the steel plate and employing higher cooling rates in the second stage and third stage, as well as controlling the final cooling temperature to 350°C or less, the microstructure of the extra-thick steel plate is effectively controlled. This results in a dual-phase microstructure dominated by bainite with a small amount of martensite. On the basis of the bainitic microstructure, the martensite provides further strengthening of the steel plate's microstructure, allowing for the regulation of its strength and toughness.

This embodiment also provides an extra-thick Q500qE bridge steel plate, which is manufactured using the above-described production method for the extra-thick Q500qE bridge steel plate.

The chemical components of the steel plate comprise the following components in percent by mass: C: 0.05~0.07%, Si: 0.15~0.35%, Mn: 1.5~1.7%, Ni: 0.3~0.5%, Cr: 0.2~0.3%, Mo: 0.2~0.3%, Cu: 0.15~0.25%, Nb: 0.04~0.05%, Ti: 0.01~0.02%, with the balance being Fe and inevitable impurities, wherein the impurities include P≤0.01% and S≤0.003%.

Additionally, the steel plate has a carbon equivalent CE ≤ 0.485 and a cold cracking susceptibility index Pcm≤0.24. The steel plate has a lower yield strength of 430MPa or more, a tensile strength of 540MPa or more, a yield ratio of 0.85 or less, an impact energy at -40°C of 180J or more, a Z-direction tensile reduction of area of 50% or more, and meets the nondestructive testing requirements of Grade II or above according to GB/T 2970-2016 standard.

In summary, the production method used in the present application involves direct rolling of the slab after three-stage heating before rolling, and three-stage cooling of the steel plate after rolling, which can produce a Q500qE steel plate with a maximum thickness of 150mm. The steel plate can meet the Z35 level Z-direction tensile performance requirements and the nondestructive testing requirements of Grade II or above according to GB/T 2970-2016 standard. The production process is simple, efficient, and cost-effective. Firstly, during the production process, ordinary continuous casting billets can be used to produce extra-thick steel plates without the need for mold casting or preparation of composite billets. Secondly, during the rolling process, high-temperature single-stage heavy reduction rolling is adopted, eliminating the need for multi-stage low-temperature controlled rolling. The rolling process is simple and efficient. Thirdly, no post-rolling heat treatment such as tempering, normalizing, or accelerated cooling is required after rolling. The production process is streamlined, with a shorter production cycle and lower production costs.

The technical solutions of the present application will be further described below with reference to one specific embodiment.

### Example 1

The chemical components of the steel plate comprise the following components in percent by mass: C: 0.058%, Si: 0.28%, Mn: 1.63%, P: 0.008%, S: 0.0026%, Ni: 0.36%, Cr: 0.24%, Mo: 0.24%, Cu: 0.20%, Nb: 0.042%, Ti: 0.014%, with the balance being Fe and inevitable impurities. The carbon equivalent (CE) is 0.463, and the cold cracking susceptibility index (Pcm) is 0.193.

The slab with a thickness of 320mm is prepared by sequentially passing through the following steps: molten iron pre-desulfuration, converter smelting, LF furnace refining, and RH furnace vacuum refining, continuous casting, and slab stacking and slow cooling.

The slab undergoes three-stage heating. The temperature of the first stage heating is 988~1093°C, with a heating time (t1) of 180 minutes. The temperature of the second stage heating is 1198~1210°C, with a heating time (t2) of 204 minutes. The temperature of the third stage heating is 1143~1156°C, with a heating time (t3) of 36 minutes.

The steel plate undergoes high-temperature, single-stage, heavy reduction rolling. After the slab is heated, it is descaled and then rolled. The rolling temperature is 1006~1038°C, the bite speed is 0.6m/s, the rolling speed is 1.2m/s, and the reduction per pass is 43mm, 45mm, 45mm, and 37mm sequencely, resulting in a finished plate with thickness of 150mm.

The rolled steel plate undergoes three-stage cooling. The cooling rate of the first stage cooling is 0.3°C/s, with a final cooling temperature of 774°C. The cooling rate of the second stage cooling is 4.5°C/s, with a final cooling temperature of 572°C, and a waiting time of 20 seconds after the second stage cooling. The cooling rate of the third stage is 7.2°C/s, with a final cooling temperature of 328°C.

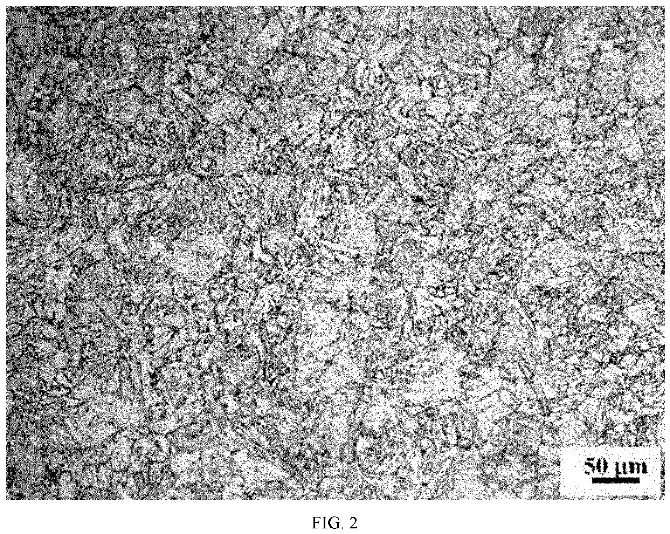

The performance of the steel plate is shown in Table 1, and the typical microstructure is shown in Figure 2.

[Table 1]

| | Thickness /mm | Lower yield strength /MPa | Tensile strength /MPa | Elongation rate/% | Yield ratio | Impact energy at -40°C/J | Z-direction tensile reduction of area /% | Nondestructive testing |
|---|---|---|---|---|---|---|---|---|
| Example 1 | 150 | 523 | 639 | 22.8 | 0.82 | 186,262,192 | 62,58,66 | Grade I |

It should be understood that although the description is divided into embodiments, each embodiment may not contain only one independent technical solution. The division of the description is for clarity, and those skilled in the art should consider the description as a whole. Various technical solutions in the embodiments can be appropriately combined to form other embodiments that can be understood by those skilled in the art.

The detailed descriptions listed above are only specific explanations of the feasible embodiments of the present application and are not intended to limit the scope of protection of the present application. Any equivalent embodiments or modifications made without departing from the spirit and scope of the present application should be included within the scope of protection of the present application.

**Claims**

1. A method for producing an extra-thick Q500qE bridge steel plate, wherein chemical components of the steel plate comprise the following components in percent by mass: C: 0.05~0.07%, Si: 0.15~0.35%, Mn: 1.5~1.7%, Ni: 0.3~0.5%, Cr: 0.2~0.3%, Mo: 0.2~0.3%, Cu: 0.15~0.25%, Nb: 0.04~0.05%, Ti: 0.01~0.02%, with balance being Fe and inevitable impurities, wherein the impurities include P$\leq$0.01% and S$\leq$0.003%;
the production method comprises the following steps:

smelting and continuous casting according to the above chemical components to obtain a slab;
sequentially heating the slab through a first stage heating, a second stage heating, and a third stage heating, wherein the temperature of the second stage heating is controlled at 1180~1220°C, and the temperatures of the first stage heating and the third stage heating are controlled to be lower than that of the second stage heating, wherein the first heating stage and the second heating stage are used to uniformly heat the slab, and the third heating stage is used to form a gradually increasing temperature gradient from the surface to the core of the slab;
rolling the heated slab with a single stage rolling, wherein the reduction per pass is controlled to be 40mm or more except the last pass, to obtain a rolled steel plate with a maximum thickness of 150mm;
sequentially cooling the rolled steel plate through a first stage cooling, a second stage cooling, and a third stage cooling, wherein the final cooling temperature of the third stage cooling is controlled to be 350°C or less, and the cooling rate of the first stage cooling, the second stage cooling, and the third stage cooling increases sequentially.

2. The method for producing an extra-thick Q500qE bridge steel plate according to claim 1, wherein the chemical components of the steel plate further satisfy: carbon equivalent CE≤ 0.485, and cold cracking susceptibility index Pcm≤0.24, wherein the formula for calculating the carbon equivalent CE is:

$$CE=(\%C)+(\%Mn)/6+(\%Cr+\%Mo+\%V)/5+(\%Ni+\%Cu)/15,$$

and the formula for calculating the cold cracking susceptibility index Pcm is:

$$Pcm=(\%C)+(\%Si)/30+(\%Mn+\%Cu+\%Cr)/20+(\%Ni)/60+(\%Mo)/15+(\%V)/10+5(\%B),$$

wherein the element symbols in parentheses represent the mass percentages of the corresponding elements, and % element symbols represent the mass percentages of the corresponding elements multiplied by 100.

3. The method for producing an extra-thick Q500qE bridge steel plate according to claim 1, wherein the step of smelting and continuous casting according to the above chemical components to obtain a slab specifically comprises:
smelting to obtain molten steel by sequentially passing through molten iron pre-desulfuration, converter smelting, LF furnace refining, and RH furnace vacuum refining working procedures according to the above chemical composition, and continuously casting the molten steel to obtain a slab with a thickness of 320mm, followed by stacking and cooling the slab.

4. The method for producing an extra-thick Q500qE bridge steel plate according to claim 1, wherein the step of sequentially heating the slab through a first stage heating, a second stage heating, and a third stage heating specifically comprises:
sequentially heating the slab through a first stage heating, a second stage heating, and a third stage heating, wherein the temperature of the first stage heating is controlled at 900~1100°C, with a heating time of 150min or more; the temperature of the second stage heating is controlled at 1180~1220°C, with a heating time of 180~240min; and the temperature of the third stage heating is controlled at 1140~1160°C, with a heating time of 30~60min.

5. The method for producing an extra-thick Q500qE bridge steel plate according to claim 1, wherein the step of rolling the heated slab with a single stage rolling specifically comprises:
descaling the slab after the three-stage heating and then rolling the slab, wherein the rolling temperature is controlled at 980~1080°C, and the reduction per pass is controlled to be 40mm or more except the last pass.

6. The method for producing an extra-thick Q500qE bridge steel plate according to claim 5, wherein the step of rolling the heated slab with a single stage rolling further comprises:
controlling the bite speed at 0.6m/s and the rolling speed at 1.2m/s during the rolling process.

7. The method for producing an extra-thick Q500qE bridge steel plate according to claim 5, wherein the step of sequentially cooling the rolled steel plate through a first stage cooling, a second stage cooling, and a third stage cooling specifically comprises:
sequentially cooling the rolled steel plate through a first stage cooling, a second stage cooling, and a third stage cooling, wherein the cooling rate of the first stage cooling is controlled at 0.3~1°C/s, with a final cooling temperature of 760~780°C; the cooling rate of the second stage cooling is controlled at 3~5°C/s, with a final cooling temperature of 560~600°C, and waiting for 20~40s after the second stage cooling; the cooling rate of the third stage cooling is controlled at 5~8°C/s, with a final cooling temperature of 350°C or less.

8. An extra-thick Q500qE bridge steel plate, wherein the steel plate is manufactured using the method for producing an extra-thick Q500qE bridge steel plate according to claim 1.

9. The extra-thick Q500qE bridge steel plate according to claim 8, wherein the microstructure of the steel plate is a dual-phase structure of bainite and martensite, wherein the amount of bainite is greater than the amount of martensite.

10. The extra-thick Q500qE bridge steel plate according to claim 9, wherein the steel plate has a lower yield strength of 430MPa or more, a tensile strength of 540MPa or more, a yield ratio of 0.85 or less, an impact energy at -40°Cof 180J or more, a Z-direction tensile reduction of area of 50% or more, and meets the nondestructive testing requirements of Grade II or above according to GB/T 2970-2016 standard.

| Smelting and continuous casting according to the above chemical components to obtain a slab | — S1 |

| Sequentially heating the slab through a first stage heating, a second stage heating, and a third stage heating. The temperature of the second stage heating is controlled at 1180~1220°C, while the temperatures of the first stage heating and the third stage heating are controlled to be lower than that of the second stage heating. The first heating stage and the second heating stage are used to uniformly heat the slab, and the third heating stage is used to form a gradually increasing temperature gradient from the surface to the core of the slab | — S2 |

| Rolling the heated slab with a single stage rolling to obtain a rolled steel plate with a maximum thickness of 150mm | — S3 |

| Sequentially cooling the rolled steel plate through a first stage cooling, a second stage cooling, and a third stage cooling. The final cooling temperature of the third stage cooling is controlled to be 350°C or less, and the cooling rate of the first stage cooling, the second stage cooling, and the third stage cooling increases sequentially | — S4 |

FIG. 1

FIG. 2

## INTERNATIONAL SEARCH REPORT

| International application No. |
|---|
| **PCT/CN2023/109002** |

| A. | CLASSIFICATION OF SUBJECT MATTER |
|---|---|
| | C22C38/02(2006.01)i |

According to International Patent Classification (IPC) or to both national classification and IPC

| B. | FIELDS SEARCHED |
|---|---|

Minimum documentation searched (classification system followed by classification symbols)

    C22C

Documentation searched other than minimum documentation to the extent that such documents are included in the fields searched

Electronic data base consulted during the international search (name of data base and, where practicable, search terms used)

    DWPI, ENTXT, CNTXT, CNKI: 碳, 硅, 锰, 镍, 铬, 钼, 铜, 铌, 钛, 铁, 桥, 特厚, 钢, C, Si, Mn, Ni, Cr, Mo, Cu, Nb, Ti, Fe, bridge, thick+, steel

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115181911 A (JIANGSU SHAGANG IRON AND STEEL RESEARCH INSTITUTE CO., LTD. et al.) 14 October 2022 (2022-10-14)<br>    claims | 1-10 |
| A | CN 108624744 A (ANGANG STEEL CO., LTD.) 09 October 2018 (2018-10-09)<br>    description, paragraphs 4-28 | 1-10 |
| A | CN 111304530 A (JIANGSU SHAGANG IRON AND STEEL RESEARCH INSTITUTE CO., LTD. et al.) 19 June 2020 (2020-06-19)<br>    entire document | 1-10 |
| A | CN 107630166 A (SHOUGANG GROUP CO., LTD.) 26 January 2018 (2018-01-26)<br>    entire document | 1-10 |
| A | CN 109112392 A (ZHANGJIAGANG HONGCHANG STEEL PLATE CO., LTD. et al.) 01 January 2019 (2019-01-01)<br>    entire document | 1-10 |
| A | JP H093591 A (SUMITOMO METAL INDUSTRIES, LTD.) 07 January 1997 (1997-01-07)<br>    entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 October 2023** | **19 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109002**

| Patent document cited in search report | | | Publication date (day/month/year) | Patent family member(s) | Publication date (day/month/year) |
|---|---|---|---|---|---|
| CN | 115181911 | A | 14 October 2022 | None | |
| CN | 108624744 | A | 09 October 2018 | None | |
| CN | 111304530 | A | 19 June 2020 | None | |
| CN | 107630166 | A | 26 January 2018 | None | |
| CN | 109112392 | A | 01 January 2019 | None | |
| JP | H093591 | A | 07 January 1997 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107557690 B
- CN 102041438 B
- CN 107460278 B
- CN 107287527 B
- CN 104988435 B
- CN 103540848 B
- GB 29702016 T
- GB 15912018 T